# EUROPEAN PATENT APPLICATION

(11) **EP 4 752 057 A1**
(43) Date of publication of application: **03.06.2026**
(21) Application number: 25219148.1
(22) Date of filing: 27.11.2025
(51) Int. Cl.: B64D 11/06, B60N 2/24

(54) **PASSENGER TRANSPORT SYSTEM FOR AN INTERNAL CABIN OF AN AIRCRAFT**

(30) Priority: 02.12.2024 US 202418965022
(71) Applicant: The Boeing Company, Arlington, VA 22202 (US)
(72) Inventor: SINGLETON, Christopher B., ARLINGTON, 22202 (US); MCINTOSH, Darren Carl, ARLINGTON, 22202 (US); STOELTING, Wade B., ARLINGTON, 22202 (US)
(74) Representative: Plasseraud IP

(57) **Abstract**

A system (100) and a method include a seat system (106) including a frame (110), a mobile platform (124), and a seat configured to removably secure to both the frame (110) of the seat system (106) and the mobile platform (124). The seat secured to the frame (110) provides a passenger seating location (142). The seat secured to the mobile platform (124) provides a transfer wheelchair (160).

## Description

### FIELD OF THE DISCLOSURE

Examples of the present disclosure generally relate to a passenger transport system for use within an internal cabin of an aircraft, such as a commercial aircraft.

### BACKGROUND OF THE DISCLOSURE

Commercial aircraft are used to transport passengers between various locations. A typical aircraft includes an internal cabin having seats for passengers, one or more galleys, and one or more lavatories.

Wheelchairs can be used to assist individuals with limited or reduced mobility within an internal cabin of an aircraft. For example, an individual can be moved on a wheelchair or specialized transfer seat within the internal cabin. These wheelchairs can be referred to as onboard wheelchairs or transfer wheelchairs.

However, space is limited within an internal cabin of an aircraft. As can be appreciated, a wheelchair or transfer seat occupies space within the internal cabin.

Additionally, while a transfer wheelchair used onboard a commercial aircraft is configured to move a passenger within an aisle, the process of moving the passenger onto the transfer wheelchair itself can involve substantial physical effort, which may not always be easy and comfortable for the passenger. Further, an aisle within a commercial aircraft may be relatively narrow (such as 15 inches wide), and an individual on a transfer wheelchair may be susceptible to bumping into armrests of seats during movement through the aisle.

### SUMMARY OF THE DISCLOSURE

A need exists for a system and a method that increase usable space within an internal cabin of a vehicle. Further, a need exists for a system and a method for disposing a wheelchair within an internal cabin, while also reducing space occupied by the wheelchair within the internal cabin. Additionally, a need exists for a simple, safe, efficient, effective, and comfortable transfer wheelchair, which can be used onboard a vehicle. A system, vehicle and method is provided in the appended claims.

With those needs in mind, certain examples of the present disclosure provide a system including a seat system including a frame, a mobile platform, and a seat configured to removably secure to both the frame of the seat system and the mobile platform. The seat secured to the frame provides a passenger seating location. The seat secured to the mobile platform provides a transfer wheelchair.

In at least one example, the seat system includes one or more additional seats secured to the frame. The one or more additional seats can be permanently fixed to the frame.

In at least one example, the frame includes one or more securing studs that secure the seat system to one or more seat tracks on or within a floor.

In at least one example, the seat includes a support coupled to a backrest.

In at least one example, the mobile platform includes one or more wheels downwardly extending from a base. The mobile platform can also include a height adjuster. The system can also include one or both of a hand crank or a foot pedal operatively coupled to the height adjuster.

The seat system can also include one or more armrests. The one or more armrests can remain secured to the frame when the seat is removed from the frame.

In at least one example, the mobile platform includes one or more arms configured to support the seat. The one or more arms can be configured to retract and extend.

Certain examples of the present disclosure provide a method including securing the seat to the frame to provide a passenger seating location; removing the seat from the frame; securing the seat to the mobile platform to provide a transfer wheelchair; removing the seat from the mobile platform; and reattaching the seat to the frame to provide the passenger seating location.

Certain examples of the present disclosure provide a vehicle including an internal cabin including a floor having one or more seat tracks, and a seat system, as described herein.

### BRIEF DESCRIPTION OF THE DRAWINGS

Figure 1 illustrates a block diagram of a system for use within an internal cabin of a vehicle, according to an example of the present disclosure.
Figure 2 illustrates a perspective front view of an aircraft, according to an example of the present disclosure.
Figure 3 illustrates a perspective interior view of an internal cabin of an aircraft, according to an example of the present disclosure.
Figure 4 illustrates a front view of a seat system, according to an example of the present disclosure.
Figure 5 illustrates a front view of the seat system of Figure 4 having a seat removed from a frame, according to an example of the present disclosure.
Figure 6 illustrates an isometric top lateral view of a mobile platform, according to an example of the present disclosure.
Figure 7 illustrates a lateral view of the mobile platform of Figure 6.
Figure 8 illustrates a front view of a transfer wheelchair, according to an example of the present disclosure.
Figure 9 illustrates a flow chart of a method, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

Examples of the present disclosure allow for seamless transition of passengers with disabilities from a terminal within an airport to a seated location within an internal cabin of an aircraft. In at least one example, a seat within the commercial aircraft is removable from a seat system, and removably coupled to a mobile platform, thereby providing a transfer wheelchair, which can be used to move the passenger within the internal cabin, as well as outside of the internal cabin (such as within the terminal of the airport). The same seat can be used by the passenger both within an assigned seating location within the internal cabin, as well as for movement within the internal cabin and outside of the internal cabin. As such, examples of the present disclosure allow passengers (such as those with reduced mobility) to be easily and efficiently moved into and out of the internal cabin.

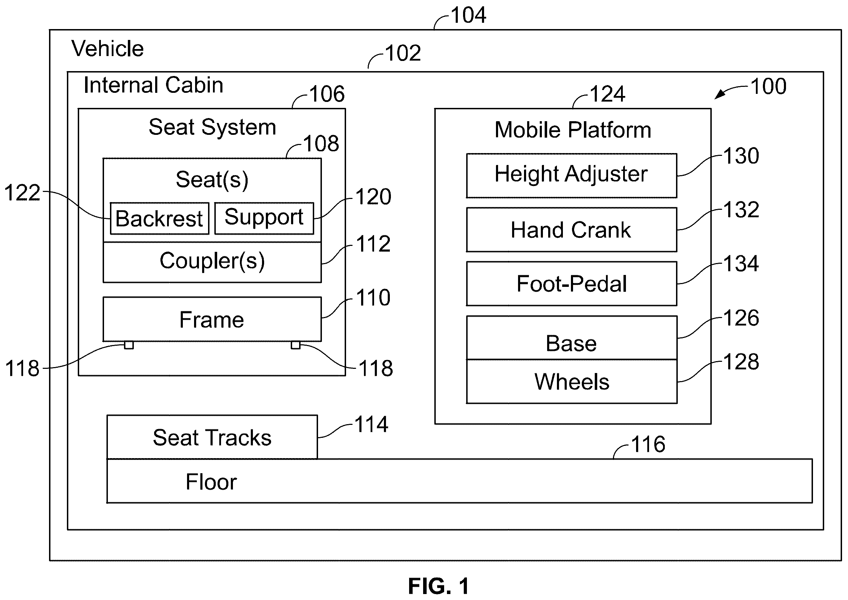

Figure 1 illustrates a block diagram of a system 100 for use within an internal cabin 102 of a vehicle 104, according to an example of the present disclosure. In at least one example, the vehicle 104 is a commercial aircraft. As another example, the vehicle 104 can be a land-based vehicle, such as a bus, train car, or the like, a water-based vehicle, or a spacecraft.

The system 100 includes a seat system 106 within the internal cabin 102. The seat system 106 includes one or more seats 108 secured to a frame 110 through one or more couplers 112. In at least one example, the seat system 106 includes three or more seats 108, in which one or more of the seats 108 are removably secured to the frame 110 through the coupler(s) 112. As a further example, one of the three seats 108 (such as an aisle seat) is removably secured to the frame 110 through a coupler 112, while the remaining two seats are permanently fixed to the frame 110 without couplers. The coupler(s) 112 can include one or more latches, detents, clasps, rails, clips, spring-biased fasteners, and/or the like that allow the seat 108 to be selectively secured to and removed from the frame 110.

The frame 110 is secured to one or more seat tracks 114 on or within a floor 116 within the internal cabin 102. As an example, the frame 110 includes a base, which may include legs that may be secured to the seat tracks 114. In at least one example, securing studs 118 (such as shear studs) downwardly extend from lower surfaces of frame 110 (such as from the legs). The securing studs 118 are securely retained within the seat tracks 114. The seat tracks 114 are configured to securely couple to the securing studs 118 to secure the seat system 106 in place within the internal cabin 102.

The seat(s) 108 includes a support 120 configured to support a seated passenger. For example, the support 120 is or includes a pan, a basin, a cushion, and/or the like on which a passenger sits. A backrest 122 is coupled to the support 120. The backrest 122 can be configured to pivot in relation to the support 120. The seat(s) 108 can also include one or more arm rests pivotally secured to the support 120 and/or the backrest 122.

The system 100 also includes a mobile platform 124, which can be stored in a closest, galley, compartment, or the like within the internal cabin 102. The mobile platform 124 includes a base 126 having one or more wheels 128 that allow the mobile platform to be rolled on the floor 116, such as within an aisle of the internal cabin 102. The wheels 128 downwardly extend from the base 126 and are configured to rollingly support the mobile platform 124 on the floor 116.

In at least one example, the mobile platform 124 also includes a height adjuster 130 coupled to the base 126. The height adjuster 130 can be supported on the base 126 opposite from the wheels 128. In at least one example, the height adjuster 130 includes a scissor jack, which can be operated with a hand crank 132, a foot pedal 134, or the like operatively coupled to the height adjuster 130. As another example, the height adjuster 130 includes a hydraulic bottle jack, which can be operated with a foot pedal. As another example, the height adjuster 130 includes a motor, such as an electric motor, operatively coupled to one or more arms, pistons, bellows, and/or the like. Alternatively, the mobile platform 124 does not include the hand crank 132 and/or the foot pedal 134. Also, alternatively, the mobile platform 124 does not include the height adjuster 130.

In operation, one or more of the seats 108 (including the support 120 and the backrest 122) are removed from the frame 110. For example, one or more of the couplers 112 can be disengaged to remove the seat(s) 108 from the frame 110. The seat(s) 108 is then removably secured to the mobile platform 124. For example, the coupler(s) 112 of the seat 108 are removably secured to reciprocal structures of the height adjuster 130 and/or the base 126. The seat 108 coupled to the mobile platform 124 provides a transfer wheelchair, while at the same time being the same seat 108 that is used on the seat system 106 during a flight of the commercial aircraft. The seat 108 is removably securable to both the frame 110 of the seat system 106, as well as the mobile platform 124. In this manner, a separate and distinct transfer wheelchair need not be used. Instead, a smaller, more compact mobile platform 124 is configured to removably couple to the seat 108. When the seat 108 is coupled to the mobile platform 124, the height adjuster 130 can be operated, such as via the hand crank 132 and/or the foot pedal 134, to move the support 120 to a height to ensure that arms of the passenger seated on the support 120 are above a level of armrests of other seats proximate to an aisle.

As described herein, the seat 108 is detachable from the frame 110 of the seat system 106, which is secured to the seat tracks 114. In at least one example, the mobile platform 124 has one or more components configured to disengage the seat 108 from the frame 110. For example, the mobile platform 124 includes one or more arms extending from the base 126 that are configured to engage one or more of the couplers 112 to selectively detach the seat 108 from the frame 110, and attach the seat 108 to the frame 110. When the mobile platform 124 is separated from the seat 108 (such as when the seat 108 is secured to the frame 110), the mobile platform 124 can be stowed within the internal cabin 102, such as within a cart compartment within a galley, a closet, and/or the like. The seat 108 secured to the mobile platform 124 provides a transfer wheelchair that can be rolled through an aisle, and off the internal cabin onto a jet bridge.

The transfer wheelchair including the seat 108 removably secured to the mobile platform 124 is configured to be moved within the internal cabin 102, such as by an attendant pushing the transfer wheelchair with an individual seated on the support 120. The height adjuster 130 is configured to be moved between a collapsed position, in which the seat 108 is at a lowest level, a fully extended position, in which the seat 108 is at a highest level, and all levels therebetween.

As described herein, the system 100 includes the seat system 106, which includes the frame 110. The system 100 also includes the mobile platform 124, and the seat(s) 108 configured to removably secure to both the frame 110 of the seat system 106, and the mobile platform 124. The seat(s) 108 secured to the frame 110 provides a passenger seating location. The seat(s) 108 secured to the mobile platform 124 provides a transfer wheelchair.

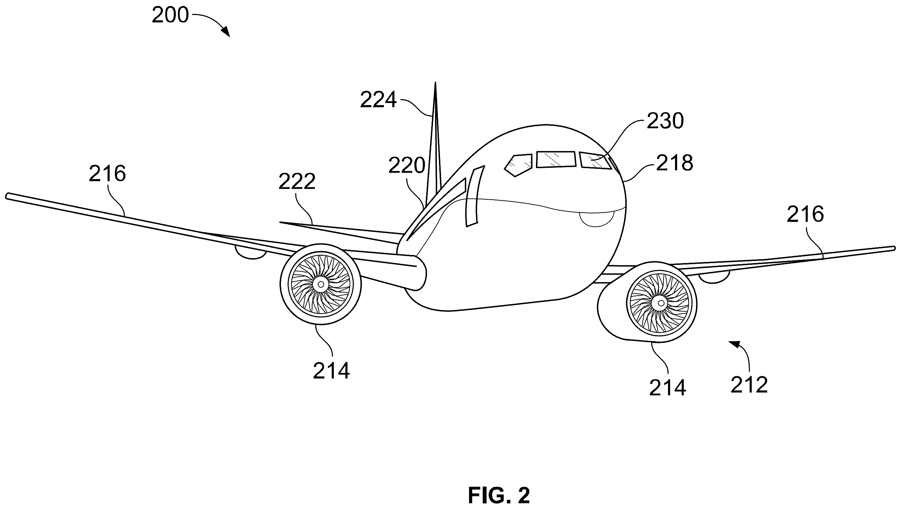

Figure 2 illustrates a perspective front view of an aircraft 200, according to an example of the present disclosure. The aircraft 200 is an example of the vehicle 104 shown in Figure 1. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224.

The fuselage 218 of the aircraft 200 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like. As described herein, the aircraft 200 includes a system 100 as shown and described herein.

Alternatively, instead of an aircraft, the system and method as described herein can be used with various other vehicles, such as automobiles, buses, locomotives and train cars, watercraft, spacecraft, and the like.

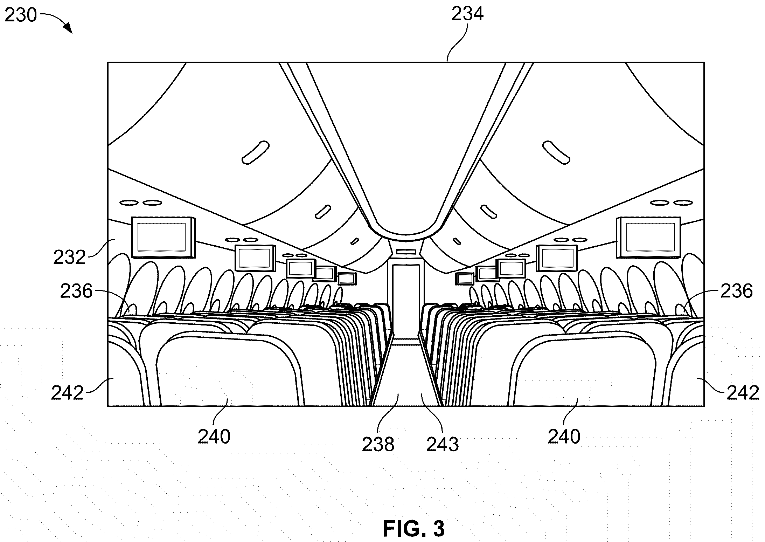

Figure 3 illustrates a perspective interior view of an internal cabin 230 of an aircraft, according to an example of the present disclosure. The internal cabin 230 includes outboard walls 232 and a ceiling 234. Windows 236 are formed within the outboard walls 232. A floor 238 supports rows of seats 240. As shown in Figure 3, a row 242 may include three seats 240 on either side of an aisle 243. However, the row 242 may include more or less seats 240 than shown. Additionally, the internal cabin 230 may include more aisles than shown.

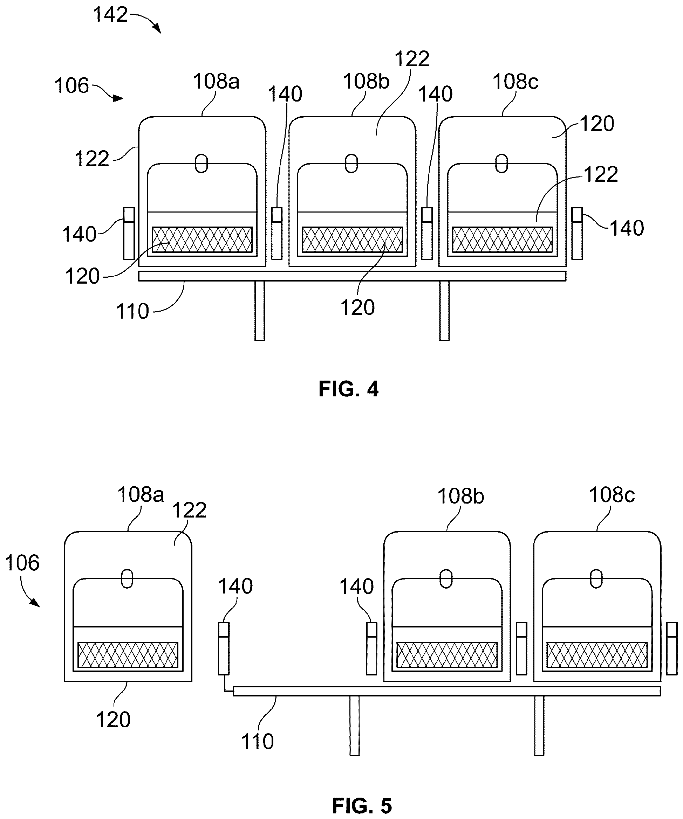

Figure 4 illustrates a front view of the seat system 106, according to an example of the present disclosure. The seat system 106 includes three seats 108a, 108b, and 108c secured to the frame 110. The seat system 106 can also include armrests 140. In at least one example, only the seat 108a, such as an aisle seat, is removably coupled to the frame 110, while the other two seats 108b (such as a middle seat), and the seat 108c (such as a window seat) are permanently fixed to the frame 110. The seat 108a secured to the frame 110 provides a passenger seating location 142 (for example, an assigned seating location) within the internal cabin 102 of the vehicle 104. Optionally, one or both of the seats 108b and 108c can also be removably coupled to the frame 110.

Figure 5 illustrates a front view of the seat system 106106 of Figure 4 having the seat 108a removed from the frame 110, according to an example of the present disclosure. The seat 108a is removable from the frame 110, and is configured to be removably secured to the mobile platform 124 (shown in Figure 1). As shown, the armrests 140 can remain secured to the frame 110, and may not be removable along with the support 120 and the backrest 122 of the seat 108a. Optionally, the armrests 140 can be removable along with the support 120 and the backrest 122 of the seat 108a.

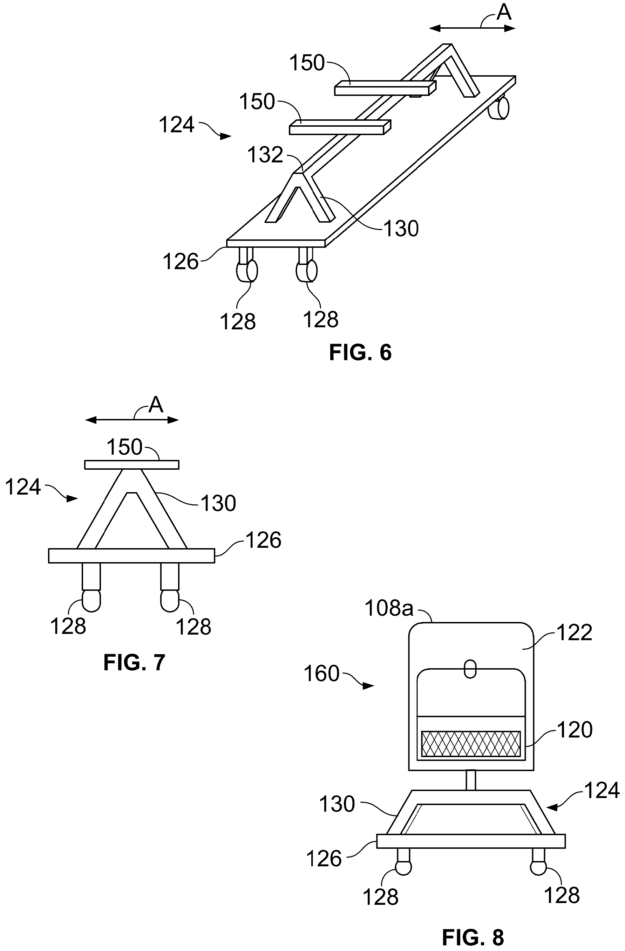

Figure 6 illustrates an isometric top lateral view of the mobile platform 124, according to an example of the present disclosure. Figure 7 illustrates a lateral view of the mobile platform 124 of Figure 6. Referring to Figures 6 and 7, in at least one example, the mobile platform 124 includes four wheels 128 downwardly extending from the base 126.

As shown, one or more arms 150 (for example, two arms 150) are secured to a top 152 of the height adjuster 130. The arms 150 are configured to extend outwardly from the top 152. The arms 150 are configured to engage the coupler(s) 112 to selectively detach the seat 108a from the frame 110 (shown in Figures 4 and 5), and attach the seat 108a to the arms 150, as well as detach the seat 108a from the arms 150 and reattach the seat 108a to the frame 110. For example, the arms 150 are configured to engage one or more detents, spring-biased clips, latches, and/or the like of the couplers 112 to selectively detach the seat 108a from the frame 110 and secure the seat 108a to the arms 150, as well as detach the seat 108a from the arms 150 and reattach the seat 108a to the frame 110.

In at least one example, the arms 150 can be configured to retract and extend, such as via the hand crank 132, and/or the foot pedal 134. For example, the arms 150 can extend along a direction denoted by arrows A to fit underneath, and/or into the couplers 112 (shown in Figure 1) to securely attach to the seat 108a (shown in Figures 4 and 5) and securely support the seat 108a. As a further example, the arms 150 are configured to reach into a side of the seat 108a and unlock the seat 108a from the frame 110. Further, the arms 150 can be retracted along a direction denoted by arrow A to disengage from the couplers 112, so as to reattach the seat 108a to the frame 110.

In at least one example, one or more of the height adjuster 130, the base 126, and/or the wheels 128 are configured to fold, collapse, compress, or the like to reduce the size of the mobile platform 124, such as when the mobile platform 124 is stowed. Optionally, the mobile platform 124 may not be configured to reduce in size.

Figure 8 illustrates a front view of a transfer wheelchair 160, according to an example of the present disclosure. The transfer wheelchair 160 includes the seat 108a secured to the mobile platform 124. Referring to Figures 1-8, the seat 108a is configured to be selectively detachable from the frame 110 of the seat system 106 and attached to the mobile platform 124 to provide the transfer wheelchair 160. Also, the seat 108a is configured to be selectively detachable from the mobile platform 124 and attached to the frame 110 to provide a passenger seating location (for example, an assigned seating location) within the internal cabin 102 of the vehicle 104.

The height of the seat 108a can be adjusted by the height adjuster 130. For example, the height adjuster 130 can be operated to lift the seat 108a so that at least a portion of the support 120 is above a level of armrests of aisle seats within an internal cabin.

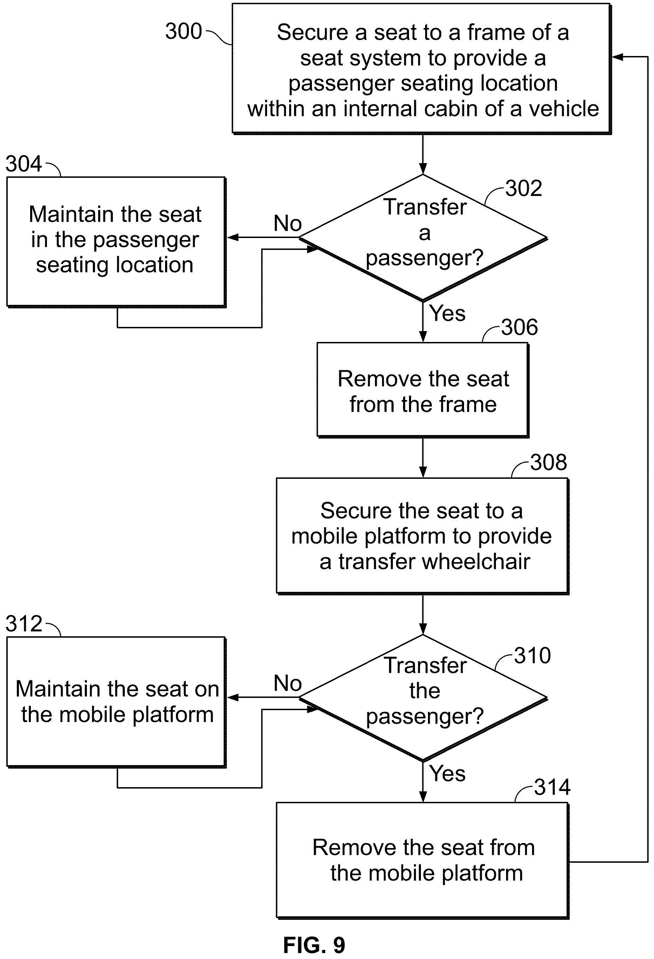

Figure 9 illustrates a flow chart of a method, according to an example of the present disclosure. Referring to Figures 1-9, at 300, the seat 108a is secured to the frame 110 of the seat system 106 to provide the passenger seating location 142 within the internal cabin 102 of the vehicle 104 (such as the aircraft 200). At 302, it is determined if a passenger needs to be transferred, whether into the internal cabin 102, out of the internal cabin 102, or within the internal cabin 102. If not, the method proceeds from 302 to 304, at which the seat 108a is maintained in the passenger seating location 142 on the frame 110.

If, however, the passenger is to be transferred, the method proceeds from 302 to 306, at which the seat 108a is removed from the frame 110. Next, at 308, the seat 108a is secured to the mobile platform 124 to provide the transfer wheelchair 160.

At 310, it is determined if the passenger is to be transferred to a seating location. If not, the method proceeds to 312, at which the seat 108a (which supports the passenger) is maintained on the mobile platform 124.

If, however, the passenger is to be transferred to the seating location at 310, the method proceeds from 310 to 314, at which the seat 108a is removed from the mobile platform 124. The method then returns to 300, at which the seat 108a is secured to the frame 110 to provide the passenger seating location 142. The passenger seating location 142 provides an assigned seat position for the passenger during a trip aboard the vehicle 104 (such as a flight of the aircraft 200).

Further, the disclosure includes examples according to the following clauses:
Clause 1. A system comprising:
   a seat system including a frame;
   a mobile platform; and
   a seat configured to removably secure to both the frame of the seat system and the mobile platform,
   wherein the seat secured to the frame provides a passenger seating location, and
   wherein the seat secured to the mobile platform provides a transfer wheelchair.
Clause 2. The system of Clause 1, wherein the seat system comprises one or more additional seats secured to the frame.
Clause 3. The system of Clause 2, wherein the one or more additional seats are permanently fixed to the frame.
Clause 4. The system of any of Clauses 1-3, wherein the frame comprises one or more securing studs that secure the seat system to one or more seat tracks on or within a floor.
Clause 5. The system of any of Clauses 1-4, wherein the seat comprises a support coupled to a backrest.
Clause 6. The system of any of Clauses 1-5, wherein the mobile platform comprises one or more wheels downwardly extending from a base.
Clause 7. The system of Clause 6, wherein the mobile platform further comprises a height adjuster.
Clause 8. The system of Clause 7, further comprising one or both of a hand crank or a foot pedal operatively coupled to the height adjuster.
Clause 9. The system of any of Clauses 1-8, wherein the seat system further comprises one or more armrests.
Clause 10. The system of any of Clauses 1-9, wherein the one or more armrests remain secured to the frame when the seat is removed from the frame.
Clause 11. The system of any of Clauses 1-10, wherein the mobile platform comprises one or more arms configured to support the seat.
Clause 12. The system of Clause 11, wherein the one or more arms are configured to retract and extend.
Clause 13. A method for a system comprising:
   a seat system including a frame;
   a mobile platform; and
   a seat configured to removably secure to both the frame of the seat system and the mobile platform,
   the method comprising:
      securing the seat to the frame to provide a passenger seating location;
      removing the seat from the frame;
      securing the seat to the mobile platform to provide a transfer wheelchair;
      removing the seat from the mobile platform; and
      reattaching the seat to the frame to provide the passenger seating location.
Clause 14. A vehicle comprising:
   an internal cabin including a floor having one or more seat tracks;
   a seat system within the internal cabin, the seat system including a frame, wherein the frame comprises one or more securing studs that secure the seat system to the one or more seat tracks;
   a mobile platform within the internal cabin, wherein the mobile platform comprises one or more wheels downwardly extending from a base; and
   a seat comprising a support coupled to a backrest, wherein the seat is configured to removably secure to both the frame of the seat system and the mobile platform,
   wherein the seat secured to the frame provides a passenger seating location within the internal cabin, and
   wherein the seat secured to the mobile platform provides a transfer wheelchair.
Clause 15. The vehicle of Clause 14, wherein the seat system comprises one or more additional seats secured to the frame.
Clause 16. The vehicle of Clauses 14 or 15, wherein the mobile platform further comprises a height adjuster.
Clause 17. The vehicle of Clause 16, further comprising one or both of a hand crank or a foot pedal operatively coupled to the height adjuster.
Clause 18. The vehicle of any of Clauses 14-17, wherein the seat system further comprises one or more armrests, and wherein the one or more armrests remain secured to the frame when the seat is removed from the frame.
Clause 19. The vehicle of any of Clauses 14-18, wherein the mobile platform further comprises one or more arms configured to support the seat.
Clause 20. The vehicle of Clause 19, wherein the one or more arms are configured to retract and extend.

As described herein, examples of the present disclosure provide systems and methods that increase useable space within an internal cabin of a vehicle. Further, examples of the present disclosure provide a system and a method for disposing a wheelchair within an internal cabin, while also reducing space occupied by the wheelchair within the internal cabin. Additionally, examples of the present disclosure provide a simple, safe, efficient, effective, and comfortable transfer wheelchair, which can be used onboard a vehicle.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a seat system (106) including a frame (110);
a mobile platform (124); and
a seat configured to removably secure to both the frame (110) of the seat system (106) and the mobile platform (124),
wherein the seat secured to the frame (110) provides a passenger seating location (142), and
wherein the seat secured to the mobile platform (124) provides a transfer wheelchair (160).

2. The system of claim 1, wherein the seat is removably secured to the frame (110) through one or more coupler (112).

3. The system (100) of claim 1 or 2, wherein the seat system (106) comprises one or more additional seats (108) secured to the frame (110).

4. The system (100) of claim 3, wherein the one or more additional seats (108) are permanently fixed to the frame (110).

5. The system (100) of any one of claims 1 to 4, wherein the frame (110) comprises one or more securing studs (118) that secure the seat system (106) to one or more seat tracks (114) on or within a floor (116, 238).

6. The system (100) of any one of claims 1 to 5, wherein the seat comprises a support (120) coupled to a backrest (122).

7. The system (100) of any one of claims 1 to 6, wherein the mobile platform (124) comprises one or more wheels (128) downwardly extending from a base (126).

8. The system (100) of claim 7, wherein the mobile platform (124) further comprises a height adjuster (130).

9. The system (100) of claim 8, further comprising one or both of a hand crank (132) or a foot pedal (134) operatively coupled to the height adjuster (130).

10. The system (100) of any one of claims 1 to 9, wherein the seat system (106) further comprises one or more armrests.

11. The system (100) of any one of claims 1 to 10, wherein the one or more armrests remain secured to the frame (110) when the seat is removed from the frame (110).

12. The system (100) of anyone of claims 1 to 11, wherein the mobile platform (124) comprises one or more arms (150) configured to support (120) the seat.

13. The system (100) of claim 12, wherein the one or more arms (150) are configured to retract and extend.

14. A method using the system (100) of anyone of claims 1 to 13, the method comprising:
securing the seat to the frame (110) to provide a passenger seating location (142);
removing the seat from the frame (110);
securing the seat to the mobile platform (124) to provide a transfer wheelchair (160);
removing the seat from the mobile platform (124); and
reattaching the seat to the frame (110) to provide the passenger seating location (142).

15. A vehicle (104) comprising:
an internal cabin (102, 230) including a floor (116, 238) having one or more seat tracks (114); and
the system (100) according to any one of claims 1 to 13;
wherein the seat system (106) and the mobile platform (124) are disposed within the internal cabin (102, 230).
